# EUROPÄISCHE PATENTSCHRIFT

(11) **EP 3 375 659 B1**
(45) Veröffentlichungstag und Bekanntmachung des Hinweises auf die Patenterteilung: **22.09.2021**
(21) Anmeldenummer: 18155437.9
(22) Anmeldetag: 07.02.2018
(51) Int. Cl.: B60N 2/28, B60N 2/68, B60N 2/809, B60N 2/427, B60R 22/26, B60P 3/32

(54) **VORRICHTUNG ZUR ANORDNUNG EINES PERSONENRÜCKHALTESYSTEMS IN EINEM FAHRZEUG**
DEVICE FOR ARRANGING A PASSENGER RETENTION SYSTEM IN A VEHICLE
DISPOSITIF DESTINÉ À AGENCER UN SYSTÈME DE RETENUE DE PASSAGER DANS UN VÉHICULE

(30) Priorität: 14.03.2017 DE 102017105384
(43) Veröffentlichungstag der Anmeldung: 19.09.2018
(73) Patentinhaber: AGUTI PRODUKTENTWICKLUNG & DESIGN GMBH, 88085 Langenargen (DE)
(72) Erfinder: Hitzfelder, Klaus, 88178 Heimenkirch (DE); Rogg, Christian, 88142 Wasserburg (DE)
(74) Vertreter: Otten, Roth, Dobler & Partner mbB Patentanwälte

(56) Entgegenhaltungen:
- WO-A1-2016/046056
- DE-A1-102006 007 384
- DE-A1-102014 003 966
- FR-A1- 3 004 151
- US-A1- 2002 109 381
- US-A1- 2004 080 194
- US-A1- 2016 362 026

## Beschreibung

### Stand der Technik

Vorrichtungen zur Anbringung eines Personenrückhaltesystems in einem Verkehrsmittel sind beispielsweise aus der DE 10 2006 007 384 A1 oder der DE 10 2004 003 966 A1 bekannt, beispielsweise zur Anbringung einer Sicherheitsgurtanordnung zur Personensicherung und von Komponenten eines dazugehörigen Personensitzes im Verkehrsmittel.

In Verkehrsmitteln, wie Fahrzeugen, beispielsweise Personenkraftwagen, Kleinbussen, Wohnmobilen oder Camping-Mobilen werden solche Vorrichtungen zusammen mit verbleibenden Teilen eines Fahrzeugsitz als eine Baueinheit für einen nach der Herstellung des Fahrzeugs nachträglichen Einbau des Fahrzeugsitz im Fahrzeuginneren bereitgestellt. Die Vorrichtung mit dem daran vorhandenen Personenrückhaltesystem muss hierbei für im Fahrzeug auftretende maximale Belastungssituationen ausgelegt sein, die insbesondere im Zusammenhang mit Unfallszenarien im Straßenverkehr auftreten können. Eine nachträgliche Veränderung der Vorrichtung oder einer Funktion der Vorrichtung nach dem Einbau der Vorrichtung im Fahrzeuginneren ist bei den bekannten Vorrichtungen nicht vorgesehen.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar.

### Aufgabe und Vorteile der Erfindung

Aufgabe der vorliegenden Erfindung ist es, ein Gurtgestell für einen Fahrzeugsitz mit einer Vorrichtung der einleitend beschriebenen Art bzw. eine Personensitzanordnung für ein Fahrzeug technisch und wirtschaftlich vorteilhaft bereitzustellen. Insbesondere soll das Gurtgestell funktional und vergleichsweise kostengünstig erweiterbar sein.

Diese Aufgabe wird durch den unabhängigen Anspruch 1 gelöst.

In den abhängigen Ansprüchen werden vorteilhafte und zweckmäßige Weiterbildungen der Erfindung genannt.

Die Erfindung geht von einem Gurtgestell für einen Fahrzeugsitz oder für eine Fahrzeugsitzbank mit einer Vorrichtung zur Anordnung eines Personenrückhaltesystems in einem Fahrzeug aus, insbesondere geht die Erfindung von einer Vorrichtung zur Anordnung eines Kindersitz aus, um mit dem Personenrückhaltesystem eine in dem Fahrzeug sitzende Person zu sichern aus, wobei die Vorrichtung am Gurtgestell befestigt ist,
wobei das Gurtgestell eine Stützanordnung mit mindestens einer Vertikalstütze und mindestens einer Querstrebe umfasst, und wobei im angeordneten Zustand der Stützanordnung am Fahrzeug die Vertikalstütze aufrecht stehend an einem Fahrzeugboden des Fahrzeugs anordenbar ist.

Das Gurtgestell umfasst vorteilhafterweise zwei, insbesondere drei Vertikalstützen, wobei die Vertikalstützen beispielsweise voneinander beabstandete vorhanden sind. Bevorzugterweise verbindet die Querstrebe die mehreren Vertikalstützen miteinander. Die Vertikalstützen sind vorteilhafterweise voneinander lateral bzw. seitlich bzw. horizontal beabstandet vorhanden. Gegebenenfalls kann im Fußbereich der Vertikalstützen eine Verbindung der Vertikalstützen miteinander vorhanden sein, z.B. durch eine Querstrebe, über welche eine Fixierung am Bodenbereich des Fahrzeugs an der Fahrzeugstruktur einrichtbar ist.

Eine Querstrebe ist vorzugsweise durchgehend ausgebildet und steht bevorzugterweise an der einen oder den mehreren Vertikalstützen horizontal bzw. seitlich über, beispielsweise beidseitig oder einseitig. Demgemäß ist die Querstrebe in der Regel länger als ein Aufstellmaß bzw. ein insbesondere lateraler Abstand von zwei, insbesondere äußeren Vertikalstützen.

Ein solches Gurtgestell ist beispielsweise als Einbauvorrichtung in der Art eines rahmenartigen Gestells ausgebildet, umfassend Freilassungen, die von parallel und winklig zueinander ausgerichteten, miteinander verbundenen, insbesondere länglichen Profilen umrahmt sind. Die Profile bestehen vorzugsweise aus einem metallischen Material.

Beispielsweise umfasst das Gurtgestell auch Anbringmittel zur Anbringung des Gurtgestells an eine Fahrzeugstruktur eines Fahrzeugs im Bereich eines Fahrzeugbodens. Das Gurtgestell ist vorzugsweise derart ausgelegt und ausgebildet, in dem Fahrzeug beziehungsweise in einem Kraftfahrzeug an einem Bodenabschnitt des Fahrzeugs befestigt zu werden. Bevorzugterweise sind die Anbringmittel dazu ausgebildet das Gurtgestell lösbar oder unlösbar fixierbar an der Fahrzeugstruktur, z.B. einem Fahrzeugrahmen, anzubringen. Z.B. ist das Gurtgestell durch die Anbringmittel im angeordneten Zustand am Fahrzeug an die Fahrzeugstruktur angeschraubt und/oder angeschweißt. Die Anbringmittel des Gurtgestells zur Anbringung an eine Fahrzeugstruktur eines Fahrzeugs im Bereich eines Fahrzeugbodens sind beispielsweise am Fußbereich des Gurtgestells ausgebildet.

Das Fahrzeug ist z.B. als ein Automobil, als ein Autobus, als ein Wohnmobil oder auch als ein Camping-Mobil ausgebildet. Das Gurtgestell bildet vorteilhafterweise eine Grundstruktur für eine Sitzanordnung im Fahrzeug, beziehungsweise für eine Fahrzeugsitzanordnung.

Ein Personen-Rückhaltesystem ist vorteilhafterweise als eine Sicherheitsgurtanordnung, z.B. als ein Mehrpunktgurt-Sicherheitssystem oder als Dreipunktgurt-Sicherheitssystem ausgebildet. Eine derartige Komponente ist z.B. als ein Gurtaufroller, eine Gurtumlenkanordnung zur Richtungsänderung des daran vorbeigeführten Gurts, eine Fixierung eines Gurtendes oder als ein Gurtschloss, an dem ein Einsteckteil lösbar einrastbar ist, mit welchem der Gurt als Schlaufe ausziehbar ist, vorhanden.

Ein weiteres Personen-Rückhaltesystem ist beispielsweise als Kindersitz und/oder als Babysafe vorhanden, der Kindersitz umfasst vorteilhafterweise Halterasten nach der sogenannten "ISOfix"-Norm. Die Halterasten des Kindersitz sind beispielsweise im rückseitigen Bereich des Kindersitz unterhalb einer Sitzfläche des Kindersitz ausgebildet. An der Vorrichtung, welche an das Gurtgestell befestigt ist, ist vorzugsweise eine Komponente des Personen-Rückhaltesystems nach "ISOfix"-Norm anbringbar.

Das Gurtgestell, an welchem die Vorrichtung anbringbar ist, muss konstruktiv bzw. mechanisch so ausgelegt sein, einer maximal tolerierbaren bzw. möglichen Belastung, insbesondere bei dynamischen Belastungsvorgängen, einen ausreichenden Widerstand entgegensetzen zu können, also entsprechende Kräfte und Momente aufzunehmen und weitergeben zu können. Dies ist Voraussetzung zur Erhaltung der Sicherheit einer Person, welche mittels eines Personenrückhaltesystems über die Vorrichtung am Gurtgestell gesichert ist. Das Gurtgestell ist demgemäß vorzugsweise dazu ausgestaltet, eine innere Gerüststruktur eines fest im Fahrzeug installierten Personensitzes zu bilden.

Für eine vergleichsweise höhere Stabilität des Gurtgestells, z.B. für eine erweiterte Einsatzmöglichkeit auf einen Personensitz mit zwei oder mehr Sitzplätzen, kann das Gurtgestell zum Beispiel genau zwei oder genau drei parallele, z.B. voneinander beabstandete Vertikalstützen umfassen, wobei die Vertikalstützen vorzugsweise identisch aufgebaut sind. Beide Vertikalstützen sind bevorzugt mit einer horizontal angeordneten Querstrebe verbunden.

Bei einem typischen vorteilhaften Gurtgestell mit zwei oder drei senkrecht im Fahrzeug aufstellbaren Vertikalstützen und einer horizontal gerichteten Querstrebe beträgt die Länge der Vertikalstützen bzw. die Höhe des Gurtgestells im montierten Zustand etwa 1,1 m bis ca. 1,3 m, wobei die Vertikalstützen, insbesondere die beiden äußeren Vertikalstützen, über einen Abstand von z.B. ca. 0,3 m bis 0,4 m voneinander seitlich beabstandet vorhanden sind. Eine Länge der Querstrebe liegt bevorzugterweise bei ca. 0,7 m bis 0,9 m.

Die Vertikalstütze und/oder die Querstrebe ist vorteilhafterweise als ein Hohlprofil ausgebildet. Im Querschnitt ist das Hohlprofil typischerweise rechteckig oder quadratisch vorhanden, denkbar ist aber auch, dass das Hohlprofil im Querschnitt rund oder elliptisch ausgebildet ist. Ein typisches Längen- und/oder Breitenmaß bzw. Seitenmaß des Querschnitts des Hohlprofils beträgt ca. 20 mm bis 40 mm. Eine Wanddicke des Hohlprofils liegt in der Regel in einem einstelligen Millimeterbereich. Denkbar ist auch, dass das Hohlprofil als ein Mehrfachhohlprofil vorhanden ist.

Des Weiteren ist es vorstellbar, dass das Hohlprofil, insbesondere die Vertikalstütze, eine Materialausnehmung z.B. eine Schlitzung aufweist, welche als Soll-Biegestelle im Belastungsfall des angeordneten Gurtgestells, z.B. in einem Crashfall des Fahrzeugs ausgebildet ist. Damit ist ein plastisches Verformungsverhalten der Vertikalstütze in einem Belastungsfall beeinflussbar, insbesondere vorgebbar. Vorteilhafterweise erstreckt sich die Ausnehmung an der Vertikalstütze insbesondere in horizontaler Richtung über eine Vorderseite der Vertikalstütze und über zumindest einen an die Vorderseite anschließenden seitlichen Bereich der Vertikalstütze. Insbesondere erstreckt sich die Materialausnehmung abschnittsweise auf der Vorderseite und auf zwei seitlich an die Vorderseite anschließende sich gegenüberliegende seitliche Bereiche der Vertikalstütze. Die Vorderseite ist bezogen auf einen Anbringzustand des Gurtgestells im Fahrzeug zu verstehen.

Ein mit dem Gurtgestell bildbarer Fahrzeug- bzw. Personensitz weist demgemäß eine Sitzstruktur mit einer Sitzfläche auf, welche sich an der Vorderseite des Personensitzes und damit an der Vorderseite des Gurtgestells bzw. der Vorderseite der Vertikalstütze und/oder einer Vorderseite der Querstrebe befindet, wobei die Vorderseite der Vertikalstütze und die Vorderseite der Querstrebe vorteilhafterweise in Fahrtrichtung ausgerichtet ist.

Im eingebauten Zustand des Gurtgestells im Fahrzeug entspricht die relevante Belastungsrichtung in der Regel einer Sitzrichtung der gesicherten Person bzw. der Fahrtrichtung des Fahrzeugs. Bei einem Fahrzeug tritt eine maximale Belastung z.B. bei einem Aufprall des fahrenden Fahrzeugs gegen ein Hindernis auf, einem Crashfall. Aufgrund der abgebremsten Masse der im Fahrzeug sitzenden und gesicherten Person wird über die Sicherheitsgurte des Personenrückhaltesystems eine ruckartig wirkende Zugkraft bzw. ein daraus resultierendes Moment in der Belastungsrichtung bzw. in Fahrtrichtung an der am Gurtgestell befestigten Vorrichtung und damit am Gurtgestell wirksam.

Ein wesentlicher Aspekt der Erfindung ist nun darin zu sehen, dass die Vorrichtung als längliches Profil vorhanden ist, wobei die Vorrichtung entlang einer Längsachse des Profils Montagemittel zur Befestigung von Halterasten des Personenrückhaltesystems, insbesondere eines ISOfix-Personenrückhaltesystems, aufweist, wobei die Montagemittel entlang der Längsachse des Profils voneinander beabstandet vorhanden sind und wobei die Vorrichtung in Form eines länglichen Profils als vom Gurtgestell separate Anbaueinheit vorhanden ist und nachträglich am Gurtgestell anbringbar ist. Hierdurch ist das Gurtgestell und/oder die Vorrichtung vergleichsweise kostengünstig herstellbar. Beispielsweise ist eine Ausbildungsvariante der Vorrichtung des erfindungsgemäßen Gurtgestells an unterschiedlichen Gurtgestellvarianten befestigbar. Hierdurch sind Entwicklungskosten und Herstellungskosten aufgrund einer höheren Stückzahl der Vorrichtungen vergleichsweise verringert.

Vorteilhafterweise ist die Vorrichtung lösbar fixierbar an das Gurtgestell anordenbar. Die Vorrichtung und das Gurtgestell ist bevorzugterweise derart ausgebildet, dass die Vorrichtung an das Gurtgestell nachrüstbar vorhanden ist, insbesondere im angeordneten Zustand des Gurtgestells am Fahrzeugsitz.

Beispielsweise erfüllt die Vorrichtung, insbesondere im angeordneten Zustand am Gurtgestell bzw. am Fahrzeugsitz, die sogenannte "ISOfix"-Norm ISO 13216.

Überdies ist es von Vorteil, dass das Profil als abgekantetes Profil, insbesondere abgekantetes Profilband, vorhanden ist. Hierdurch ist die Vorrichtung zum einen vergleichsweise günstig herstellbar und zum anderen vergleichsweise stabil vorhanden.

Das Profil ist vorteilhafterweise als ein insbesondere abgekantetes Stahlband vorhanden, z.B. als abgekantete Profilleiste und/oder abgekantete Stahlleiste. Das Profil ist in einem Querschnitt beispielsweise L-förmig oder U-förmig vorhanden, hierdurch ist es gegenüber einer Querkraft, welche insbesondere senkrecht zu einer Längsachse des Profils am Profil angreift, insbesondere im Crashfall, vergleichsweise stabil vorhanden. Das Profil ist vorteilhafterweise einstückig ausgebildet. Hierdurch ist die Vorrichtung vergleichsweise kostengünstig herstellbar.

Erfindungsgemäß ist das Profil derart vorhanden, dass das Profil im angeordneten Zustand am Gurtgestell die Vertikalstütze umgreift. Beispielsweise umschließt das Profil im angeordneten Zustand am Gurtgestell die Vertikalstütze, insbesondere vollständig, z.B. klammerartig. Dadurch ist das Profil vergleichsweise einfach an das Gurtgestell anordenbar, insbesondere vergleichsweise einfach am Gurtgestell fixierbar.

Bevorzugterweise umfasst das Profil ein Aufnahmeorgan zur Aufnahme der Vertikalstütze des Gurtgestells im angeordneten Zustand. Das Aufnahmeorgan ist vorteilhafterweise als Aussparung ausgebildet. Das Aufnahmeorgan umschließt die Vertikalstütze im angeordneten Zustand am Gurtgestell z.B. an drei Seiten, z.B. durch Seitenränder der Aussparung.

Außerdem erweist es sich von Vorteil, dass die Vorrichtung Klemmmittel aufweist, wobei die Vorrichtung im angeordneten Zustand am Gurtgestell durch die Klemmmittel an der Vertikalstütze des Gurtgestells fixiert ist, z.B. geklemmt. Denkbar ist weiterhin, dass die Klemmmittel in einer Weise ausgebildet sind, dass die Vorrichtung werkzeuglos am Gurtgestell fixierbar ist. Vorstellbar ist weiterhin, dass die Vorrichtung und/oder die Klemmmittel im angeordneten Zustand am Gurtgestell lösbar, z.B. auswechselbar, am Gurtgestell vorhanden sind.

Vorteilhafterweise erstreckt sich im angeordneten Zustand am Gurtgestell das längliche Profil, insbesondere eine Außenkante der Aussparung des Profils, bis an einen rückwärtigen Bereich der Vertikalstütze. Z.B. erstreckt sich das Profil derart, dass es im angeordneten Bereich am Gurtgestell bündig mit einer Hinterkante und/oder einer Rückseite der Vertikalstütze vorhanden ist. Denkbar ist auch, dass das Profil im angeordneten Zustand über den rückwärtigen Bereich der Vertikalstütze überstehend vorhanden ist. Das längliche Profil umfasst beispielsweise Montageöffnungen, z.B. Bohrungen, zur Aufnahme der Klemmmittel. Denkbar ist weiterhin, dass im angeordneten Zustand am Gurtgestell, das Profil, insbesondere die Aussparung des Profils, und das Klemmmittel anliegend an der Vertikalstütze vorhanden sind, z.B. in Kontakt mit der Vertikalstütze vorhanden sind. Im angeordneten Zustand am Gurtgestell sind die Klemmmittel insbesondere ausschließlich an der Rückseite der Vertikalstütze an der Vertikalstütze anliegend vorhanden. Eine Länge des Klemmmittels ist vorteilhafterweise gleich oder größer als eine Breite der Vertikalstütze. Die Rückseite der Vertikalstütze erstreckt sich beispielsweise entlang der Breite und einer Länge der Vertikalstütze.

Vorstellbar ist, dass sich die Breite des Klemmmittels im angeordneten Zustand am Gurtgestell bis an die Hinterkante der Rückseite der Vertikalstütze erstreckt. Vorteilhafterweise erstreckt sich das Klemmmittel entlang seiner Breite im angeordneten Zustand am Gurtgestell über eine Hinterkante der Rückseite der Vertikalstütze hinaus, insbesondere über die Breite der Vertikalstütze hinaus. Im angeordneten Zustand des Klemmmittels und des Profils am Gurtgestell erstrecken sich das Klemmmittel und das Profil vorteilhafterweise parallel zueinander, insbesondere erstreckt sich die Längsachse des Profils parallel zu einer Vorderseite des Klemmmittels, wobei das Klemmmittel mit der Vorderseite bspw. anliegend an einer Vertikalstütze des Gurtgestells vorhanden ist. Beispielsweise erstrecken sich die Breite des Klemmmittels und die Längsachse des Profils im angeordneten Zustand am Gurtgestell in einer horizontalen Richtung.

In einer vorteilhaften Ausgestaltung der Vorrichtung ist ein Abstand einer Haltestelle des Montagemittels von einem Anbindungspunkt des Montagemittels am Profil einstellbar vorhanden, wobei im angeordneten Zustand eine Halteraste des Personenrückhaltesystems an der Haltestelle des Montagemittels angreift. Hierdurch ist das Gurtgestell, insbesondere die Vorrichtung, an eine Ausgestaltung eines Fahrzeugsitzes anpassbar. Beispielsweise an eine Polsterdicke des Fahrzeugsitzes. Durch die Anpassbarkeit der Vorrichtung ist eine Montage des Personenrückhaltesystems an den Montagemitteln vereinfacht.

Vorteilhafterweise sind zwei Montagemittel zur Befestigung eines Personenrückhaltesystems an der Vorrichtung vorgesehen. Ein Montagemittel ist vorteilhafterweise als ein Bügel, z.B. als ein Haltebügel ausgebildet. Denkbar ist, dass ein Montagemittel U-förmig oder L-förmig vorhanden ist. Das Montagemittel ist z.B. formstabil vorhanden. Das Montagemittel ist dazu vorgesehen mit einer Halteraste des Personenrückhaltesystems, insbesondere mit einer Halteraste eines Kindersitz, zu verrasten, z.B. eine lösbare Verbindung einzugehen.

Beispielsweise ist ein Abstand der Haltestelle von dem Anbindungspunkt des Montagemittels am Profil über Schraubmittel einstellbar ausgebildet. Beispielsweise ist das Montagemittel als U-förmiger Haltebügel vorhanden, wobei offene Enden des U-förmigen Haltebügels Außengewinde aufweisen, z.B. gewindestangenartig vorhanden sind. Hierdurch ist ein Abstand der Haltestelle von dem Anbindungspunkt des Montagemittels am Profil vergleichsweise einfach über Schraubmittel justierbar. Beispielsweise sind die Montagemittel im angeordneten Zustand am Profil mit dem Profil über eine Schraubverbindung lösbar, insbesondere justierbar, verbunden. Denkbar ist auch, dass die Montagemittel an das Profil geschweißt, genietet und/oder geklebt sind. Vorteilhafterweise sind die Montagemittel abstehend vom Profil am Profil vorhanden.

Weiter wird vorgeschlagen, dass die Vorrichtung, insbesondere das Profil, ein Rastermaß aufweist. Durch das Rastermaß ist das Profil derart vorhanden, dass es an unterschiedliche Gurtgestelle, welche ebenfalls das Rastermaß aufweisen anordenbar ist. Insbesondere ist eine einzige Vorrichtung für unterschiedliche Gurtgestelle verwendbar. Hierdurch sind die Gurtgestelle vergleichsweise kostengünstig und einfach mit einem Personenrückhaltesystem, insbesondere mit einem Isofix-Personenrückhaltesystem zur Befestigung eines Kindersitz und/oder eines Babysafes, nachrüstbar.

Vorteilhafterweise ist das Gurtgestell in einer Weise ausgebildet, dass eine am Gurtgestell befestigte Vorrichtung am Gurtgestell fixiert ist.

Als vorteilhaft erweist sich auch, dass die Stützanordnung des Gurtgestells zwei Querstreben aufweist, wobei eine erste Querstrebe an einem oberen Ende der Stützanordnung vorhanden ist, wobei die erste Querstrebe zur Anordnung einer Kopfstütze des Fahrzeugsitzes ausgebildet ist, wobei eine zweite Querstrebe in vertikaler Richtung betrachtet in einem mittleren Bereich der Stützanordnung vorhanden ist, wobei im angeordneten Zustand des Gurtgestells am Fahrzeugsitz an der zweiten Querstrebe Komponenten eines Personenrückhaltesystems angeordnet sind, wobei die erste und die zweite Querstrebe sich in horizontaler Richtung an der Stützanordnung erstrecken, wobei an einem äußeren Bereich der ersten und der zweiten Querstrebe die erste und die zweite Querstrebe in vertikaler Erstreckung betrachtet durch ein bandartiges Element miteinander verbunden sind, wobei das bandartige Element Anbindungsmittel aufweist, wodurch eine der oben genannten Varianten der Vorrichtung im angeordneten Zustand am Gurtgestell fixiert ist. Hierdurch sind das Profil und das Gurtgestell vergleichsweise stabiler vorhanden, wobei eine Energieabsorption und Weiterleitung, insbesondere im Crashfall, von auf das Profil und/oder das Gurtgestell wirkenden Kräften verbessert ist.

Das bandartige Element ist beispielsweise als Flachstahl oder als Blechstreifen vorhanden. Denkbar ist auch, dass das bandartige Element als ein Band, insbesondere als ein Gurtband ausgebildet ist. Das bandartige Element ist vorteilhafterweise unlösbar mit den Querstreben verbunden. Das bandartige Element ist z.B. mit den Querstreben verschraubt, vernietet, verschweißt, verlötet und/oder verklebt. Bevorzugterweise sind zwei bandartige Elemente an der Stützanordnung vorgesehen, wobei die beiden bandartigen Elemente voneinander beabstandet an gegenüberliegenden Enden der Querstreben befestigt sind.

Vorteilhafterweise ist ein Anbindungsmittel als Öffnung, Loch und/oder Bohrung, z.B. Durchgangsbohrung, am bandartigen Element ausgebildet, wobei die Vorrichtung durch Befestigungsmittel, z.B. in Form einer Schraube und/oder einer Niete, an der Öffnung des bandartigen Elements insbesondere lösbar befestigbar ist. Beispielsweise ist die Vorrichtung im angeordneten Zustand am Gurtgestell an voneinander beabstandeten Enden des Profils jeweils mit einem Ende des Profils mit einem bandartigen Element des Gurtgestells verbindbar vorhanden.

Beispielsweise sind am Gurtgestell, insbesondere am Fahrzeugsitz, zwei insbesondere zueinander verschiedene Personenrückhaltesysteme vorhanden. Z.B. ein Dreipunktgurt-Sicherheitssystem und/oder ein Mehrfachpunktgurt-Sicherheitssystem und ein Personenrückhaltesystem für einen Kindersitz, z.B. entsprechend der "ISOfix-Norm".

Überdies ist es von Vorteil, dass die Vorrichtung in einer vertikalen Erstreckung der Stützanordnung betrachtet in einem Bereich zwischen der ersten und der zweiten Querstrebe am Gurtgestell angeordnet, insbesondere vorhanden ist. An der ersten und an der zweiten Querstrebe sind im angeordneten Zustand des Gurtgestells am Fahrzeugsitz und/oder am Fahrzeug vorteilhafterweise Komponenten eines Personen-Sicherheitssystems befestigt, insbesondere eines Dreipunktgurt-Sicherheitssystems. Z.B. ist an der zweiten Querstrebe ein Gurtschloss befestigbar und an der ersten Querstrebe z.B. ein Gurtaufroller.

Außerdem wird vorgeschlagen, dass an der ersten Querstrebe Montagemittel zur Befestigung eines Top-Tether-Bands eines Personenrückhaltesystems, insbesondere eines Kindersitz, vorhanden sind. Vorteilhafterweise sind die Montagemittel an der ersten Querstrebe in einem Bereich zwischen Montagepunkten einer Kopfstütze des Fahrzeugsitzes vorhanden. Ein Montagemittel ist beispielsweise als Aussparung und/oder Öffnung, z.B. als eine Bohrung an der ersten Querstrebe vorhanden. Hierdurch ist das Top-Tether-Band vergleichsweise einfach an der ersten Querstrebe befestigbar, z.B. einhängbar.

Auch erweist es sich von Vorteil, dass das Gurtgestell ein Rastermaß aufweist. Das Rastermaß des Gurtgestells ist insbesondere derart ausgebildet, dass ein horizontaler Abstand der Vertikalstrebe oder ggf. der Vertikalstreben und der bandartigen Elemente das Rastermaß vorgeben. Vorteilhafterweise ist bei zueinander unterschiedlichen Gurtgestellen der horizontale Abstand der Vertikalstrebe oder der Vertikalstreben und/oder der bandartigen Elemente gleich. Hierdurch ist eine einzige Vorrichtung an mehrere zueinander unterschiedliche Gurtgestelle anordenbar.

### Beschreibung eines Ausführungsbeispiels

Ein Ausführungsbeispiel wird anhand der nachstehenden schematischen Zeichnungen unter Angabe weiterer Einzelheiten und Vorteile näher erläutert.

Es zeigen:
- Figur 1: in einer perspektivischen Ansicht von schräg seitlich vorne oben ein Gurtgestell mit einer erfindungsgemäßen Vorrichtung im angeordneten Zustand am Gurtgestell,
- Figur 2: in einer perspektivischen Ansicht von schräg seitlich vorne oben das Gurtgestell aus Figur 1 mit der Vorrichtung in einer Explosionsdarstellung,
- Figur 3: in einer perspektivischen Ansicht von schräg seitlich vorne oben das Gurtgestell aus Figur 1 mit angeordneten Gurtpeitschen und einem Personenrückhaltesystem in einem vom Gurtgestell losgelösten Zustand,
- Figur 4: eine Detailansicht des Gurtgestells aus Figur 1,
- Figur 5: eine Frontansicht des Gurtgestells aus Figur 1,
- Figur 6: eine Rückansicht des Gurtgestells aus Figur 1,
- Figur 7: eine Aufsicht auf das Gurtgestell aus Figur 1 und
- Figur 8: eine Seitenansicht auf das Gurtgestell aus Figur 1.

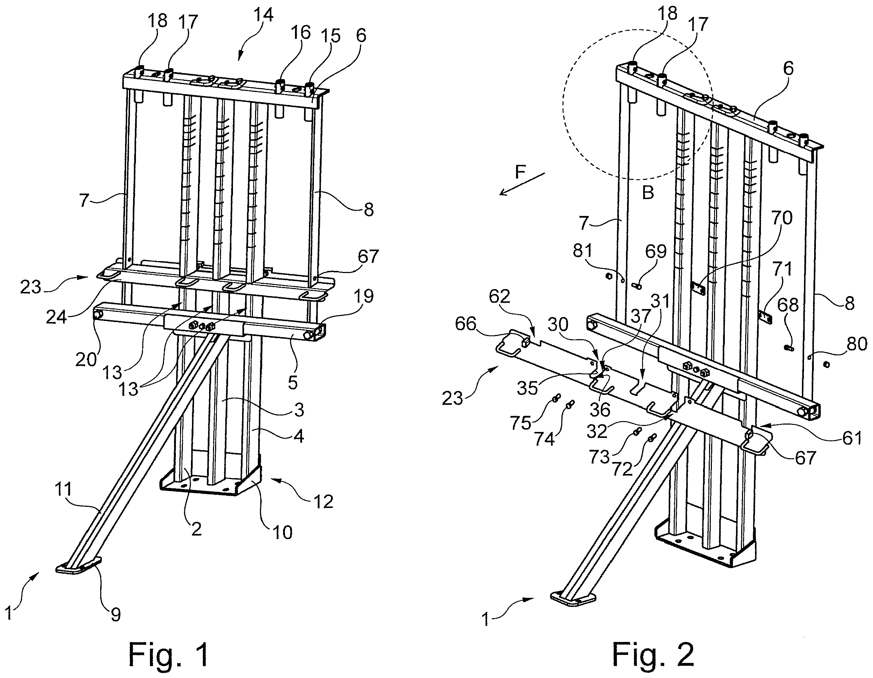

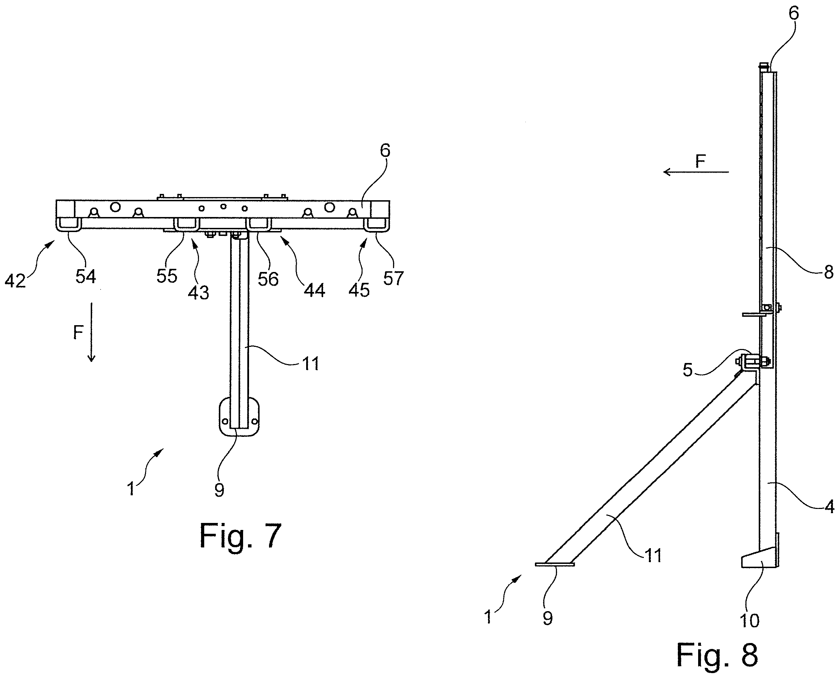

Ein Grundgestell 1 umfasst z.B. unter anderem drei Vertikalstützen 2 - 4, eine erste Querstrebe 5 und eine zweite Querstrebe 6, zwei Verbindungselemente 7, 8, ein Anbringmittel 9, 10 und einen Stützfuß 11 (Figuren 1 bis 3 und 5 bis 8). Das Gurtgestell 1 ist z.B. für eine zweisitzigen Fahrzeugsitz (nicht gezeigt) ausgebildet.

Längsachsen der drei Vertikalstützen 2 - 4 sind im angeordneten Zustand am Grundgestell 1 vertikal ausgerichtet vorhanden. Die Vertikalstützen 2 - 4 sind beabstandet voneinander und beispielsweise parallel zueinander nebeneinander vorhanden. Im Fußbereich 12 der Vertikalstützen 2 - 4 sind Anbringmittel 10 vorgesehen, um die Vertikalstützen 2 - 4 im angeordneten Zustand an einem Fahrzeug (nicht dargestellt) zu befestigen, zum Beispiel an einem Fahrzeugboden anzuschrauben. Vorteilhaft senkrecht zu den Vertikalstützen 2 - 4 sind die Querstreben 5, 6 vorhanden und bevorzugterweise mit jeder der Vertikalstützen 2 - 4 insbesondere unlösbar verbunden. Beispielsweise sind die Querstreben 5, 6 an die Vertikalstützen 2 - 4 angeschweißt. Denkbar ist auch, dass die Querstreben 5, 6 mit den Vertikalstützen 2 - 4 verschraubt und/oder vernietet sind. Vorteilhafterweise ist die erste Querstrebe 5 mit einer Rückseite an einer Vorderseite 13 der Vertikalstütze 2 - 4 montiert. Eine Oberflächennormale der Vorderseite 13 der Vertikalstützen 2 - 4 zeigt vorteilhafterweise im angeordneten Zustand des Gurtgestells 1 am Fahrzeug in eine Fahrtrichtung F des Fahrzeugs, insbesondere in Richtung Fahrzeugfront.

Die zweite Querstrebe 6 ist beispielsweise an einem Kopfbereich 14 des Gurtgestells 1 an einer der Vertikalstützen 2 - 4 oder an jeder der Vertikalstützen 2 - 4 angeordnet. An der zweiten Querstrebe 6 sind hülsenartige Anbringelemente 15 - 18 ausgebildet, welche dazu vorgesehen sind, z.B. jeweils paarweise, eine Kopfstütze (nicht dargestellt) anzuordnen.

Die erste Querstrebe 5 ist vorteilhafterweise etwa auf Höhe einer Sitzfläche eines Fahrzeugsitz an den Vertikalstützen 2 - 4 befestigt, wobei der Fahrzeugsitz das Grundgestell 1 umfasst. Insbesondere ist die erste Querstrebe 5 ausgehend von den Anbringmittel 10 in vertikaler Richtung nach oben auf Höhe eines ersten und/oder untersten Drittels einer Länge der Vertikalstützen 2 - 4 ausgebildet.

Die Verbindungselemente 7, 8 sind beispielsweise bandartig vorhanden, z.B. als ein Stahlband. Die Verbindungselemente 7, 8 verbinden die erste Querstrebe 5 und die zweite Querstrebe 6 miteinander. Vorteilhafterweise sind die Verbindungselemente 7, 8 mit den Querstreben 5, 6 unlösbar verbunden, z.B. verschweißt. Die Verbindungselemente 7, 8 sind bspw. parallel zu den Vertikalstützen 2 - 4 ausgerichtet vorhanden und erstrecken sich z.B. in vertikaler Richtung. Vorteilhafterweise sind die Verbindungselemente 7, 8 dazu vorgesehen die Querstreben 5, 6 insbesondere in einem Crashfall in einem definierten z.B. vertikalen Abstand zueinander zu halten. Beispielsweise sind die Verbindungselemente 7, 8 dazu vorgesehen einen maximalen vertikalen Abstand der Querstreben 5, 6 zueinander festzulegen, insbesondere so, dass die Querstreben 5, 6 zueinander den maximale vertikale Abstand im Crashfall nicht überschreiten. Bevorzugterweise verbinden die Verbindungselemente 7, 8 Enden der Querstreben 5, 6 miteinander.

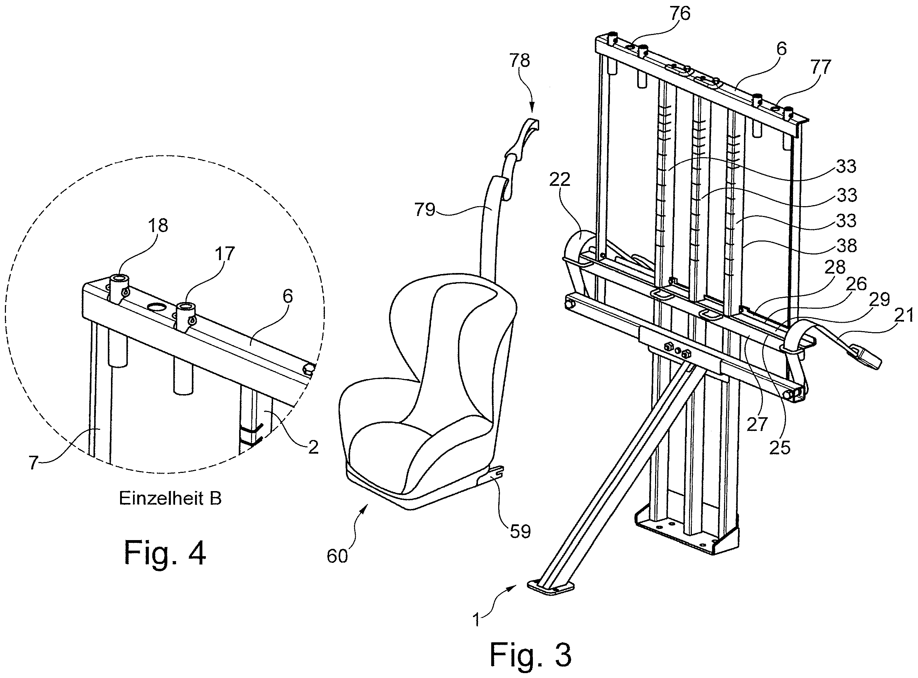

Weiterhin sind an den Enden der ersten Querstrebe 5 Befestigungsschrauben 19, 20 ausgebildet. An den Befestigungsschrauben 19, 20 ist im angeordneten Zustand des Gurtgestells 1 am Fahrzeugsitz eine Sicherheitskomponente eines Personenrückhaltesystems befestigt, z.B. eine Gurtpeitsche 21, 22 mit einem Gurtschloss (Figur 3) eines 3-Punkt-Gurt-Sicherheitssystems.

Eine erfindungsgemäße Vorrichtung 23 ist als längliches, insbesondere abgekantetes Profil 24 ausgebildet. Das Profil 24 weist beispielsweise zwei Abkantungen 25, 26 in Form von Umbiegungen auf, sodass es im Querschnitt zick-zack-artig vorhanden ist. Die Abkantungen 25, 26 erstrecken sich vorteilhafterweise entlang einer Längsachse des Profils 24. Das Profil 24 besitzt z.B. einen ersten und einen zweiten flächigen Profilabschnitt 27, 28, wobei die beiden Profilabschnitte 27, 28 vorteilhafterweise parallel zueinander vorhanden sind. Der erste und der zweite Profilabschnitt 27, 28 erstreckt sich im angeordneten Zustand am Gurtgestell 1 vorteilhafterweise jeweils in einer vertikalen Richtung, z.B. parallel zur Längsachse einer Vertikalstütze 2 - 4 und entlang der Längsachse des Profils 24. Außerdem besitzt das Profil 24 einen dritten flächigen Profilabschnitt 29, welcher vorteilhafterweise winklig zum ersten und zum zweiten Profilabschnitt 27, 28 ausgerichtet vorhanden ist. Der Profilabschnitt 29 ist im angeordneten Zustand am Gurtgestell 1 vorteilhafterweise horizontal ausgerichtet vorhanden. Das Profil 24 ist bspw. einstückig vorhanden, wobei die drei Profilabschnitte 27 - 29 über die Abkantungen 25, 26 ineinander übergehen (Figuren 2, 3).

Das Profil 24 umfasst des Weiteren voneinander beabstandete Aufnahmeorgane in Form von Aussparungen 30 - 32. Die Aussparungen 30 - 32 sind aus dem Profil 24 bspw. ausgeschnitten, z.B. ausgelasert. Die Aussparungen 30 - 32 sind insbesondere am zweiten und dritten Profilabschnitt 28, 29 vorhanden, dass das Profil 24 in horizontaler Richtung auf die Vertikalstützen 2 - 4 aufsetzbar oder aufschiebbar vorhanden ist. Die Aussparungen 30 - 32 sind insbesondere auf eine Außenkontur der Vertikalstützen 2 - 4 des Gurtgestells 1 abgestimmt, dass die Aussparungen 30 - 32 im angerordneten Zustand der Vorrichtung 23 am Gurtgestell 1 die Vertikalstützen 2 - 4 zumindest an der Vorderseite 13 und an Seitenflächen 33, 34 insbesondere vollständig, bspw. direkt anliegend, umschließen. Die Aussparungen 30 - 32 liegen mit Randflächen 35 - 37 im angeordneten Zustand am Gurtgestell 1 vorteilhafterweise insbesondere bündig und/oder formschlüssig an der Vorderseite 13 und den Seitenflächen 33, 34 der Vertikalstützen 2 - 4 an.

Vorstellbar ist, dass eine Breite des dritten Profilabschnitts 29 größer ist, als eine Tiefe der Vertikalstützen 2 - 4. Vorteilhafterweise erstreckt sich der dritte Profilabschnitt 29 im angeordneten Zustand des Profils 24 am Gurtgestell 1 entgegengesetzt zur Fahrtrichtung F über eine hintere Kante 38 der Vertikalstütze 2 - 4. Beispielsweise ist eine Frontseite 39 des zweiten Profilabschnitts 28 im angeordneten Zustand der Vorrichtung 23 am Gurtgestell 1 bündig zu einer Rückseite 40 der Vertikalstützen 2 - 4 vorhanden. Denkbar ist auch, dass eine Rückseite 41 des zweiten Profilabschnitts 28 bündig zur Rückseite 40 der Vertikalstützen 2 - 4 im angeordneten Zustand des Profils 24 am Gurtgestell 1 vorhanden ist, wobei die Rückseite 41 gegenüberliegend und beabstandet zur Frontseite 39 des zweiten Profilabschnitts 28 ausgebildet ist.

Ein Abstand der Aussparungen 30 - 32 entlang der Längsachse des Profils 24 entspricht vorteilhafterweise einem horizontalen Abstand der Vertikalstützen 2 - 4 des Gurtgestells 1, sodass die Vorrichtung 23 vergleichsweise einfach und passgenau an das Gurtgestell 1 anbringbar ist. Die Abstände der Aussparungen 30 - 32 und der Vertikalstützen 2 - 4 entsprechen beispielsweise einem Rastermaß.

Die Vorrichtung 23 umfasst außerdem Montagemittel in Form von U-förmig ausgebildeten Haltebügeln 42 - 45, welche am ersten Profilabschnitt 27 abstehend angeordnet sind. Die Haltebügel 42 - 45 sind beispielsweise an Anbindungspunkten 46 - 53 mit dem Profil 24 verschraubt und/oder verschweißt. Ein Abstand einer Haltestelle 54 - 57 der Haltebügel 42 - 45 von einer Vorderseite 58 des zweiten Profilabschnitts 27 ist z.B. vor der Montage der Vorrichtung 23 am Gurtgestell 1 einstellbar, wobei an der Haltestelle 54 - 57 eine Halteraste 59 eines Kindersitz 60 im angeordneten Zustand des Kindersitz 60 am Gurtgestell 1 angreift. Vorteilhafterweise ist eine Änderung des Abstands der Haltestelle 54 - 57 zur Vorderseite 58 im angeordneten Zustand der Vorrichtung 23 am Gurtgestell 1 verhindert, z.B. weil die Haltebügel 42 - 45 nach dem Einstellen des Abstands mit dem Profil 24 verschweißt sind.

Weiterhin umfasst das Profil 24 schlitzartige Ausnehmungen 61, 62, in welche im angeordneten Zustand der Vorrichtung 23 am Gurtgestell 1 die Verbindungselemente 7, 8 eingreifend vorhanden sind. Die schlitzartige Ausnehmung 61, 62 erstreckt sich am Profil 24 bevorzugterweise am zweiten und dritten Profilabschnitt 28, 29. Vorteilhafterweise umschließt die Ausnehmung 61, 62 ein Verbindungselement 7, 8 z.B. formschlüssig zumindest an Seitenflächen 63, 64 und an einer Frontseite 65 des Verbindungselements 7, 8. Im Bereich der schlitzartigen Ausnehmung 61, 62 ist aus dem zweiten Profilabschnitt 28 ein fahnenartiges Anbindungselement 66, 67 ausgeschnitten und in Richtung des zweiten Profilabschnitts 27 nach vorne ausgebogen, insbesondere im angeordneten Zustand des Profils 24 am Gurtgestell 1 in Fahrtrichtung F ausgebogen. Vorteilhafterweise sind die Anbindungselemente 66, 67 im angeordneten Zustand am Gurtgestell 1 anliegend an der äußeren Seitenfläche 64 der Verbindungselemente 7, 8 vorhanden und mit diesen an Montagestellen 80, 81 verbunden, z.B. mit Schrauben 68, 69 verschraubt.

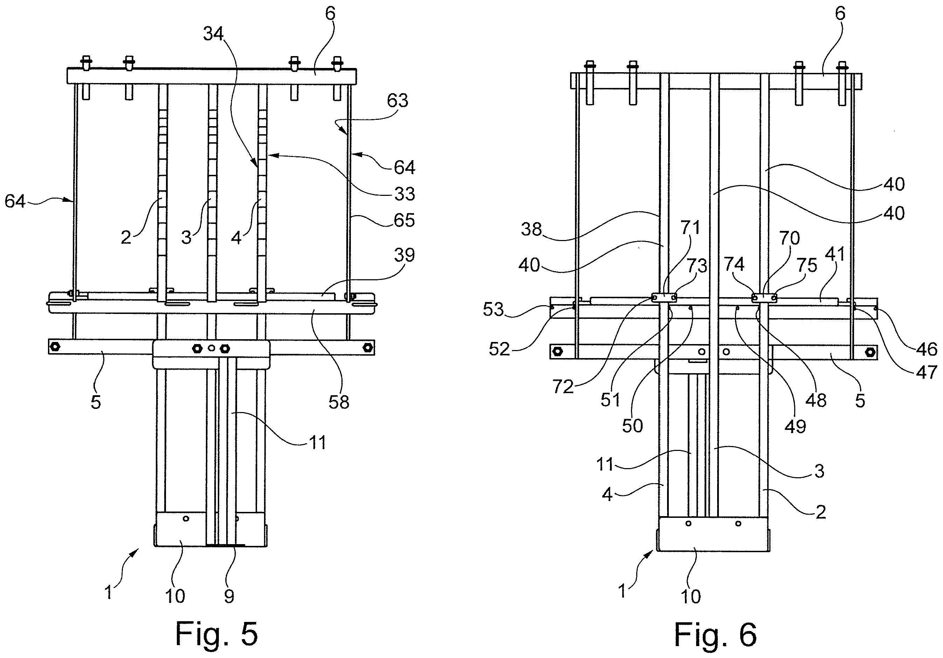

Insbesondere den Figuren 2 und 6 ist zu entnehmen, dass die Vorrichtung 23 Klemmmittel in Form von Verbindungsplatten 70, 71 umfasst. Die Verbindungsplatten 70, 71 werden im angeordneten Zustand des Profils 24 am Gurtgestell 1 anliegend an die Rückseite 40 der Vertikalstütze 2 - 4 angeordnet und mit dem Profil 24 über Schrauben 72 -75 verschraubt. Hierdurch wird eine vordere Randfläche 36 der Aussparungen 30 - 32 gegen die Vorderseite 13 der Vertikalstütze 2 - 4 gezogen und damit die Vorrichtung 23 am Gurtgestell 1 angeklemmt. Im gezeigten Ausführungsbeispiel ist die Vorrichtung 23 mittels zweier Verbindungsplatten 70, 71 an das Gurtgestell 1 angeordnet. Denkbar ist aber auch, dass die Vorrichtung über eine einzige Verbindungsplatte an einer einzigen Vertikalstütze 2 - 4 mit dem Gurtgestell klemmend verbunden ist. Vorstellbar ist weiterhin, dass die Vorrichtung an allen Vertikalstützen eines Gurtgestells klemmend mit dem Gurtgestell verbunden ist.

Figur 4 ist ein vergrößerter Ausschnitt des Gurtgestells 1 nach Figur 2 zu entnehmen. In Figur 4 ist ein Teilbereich der kopfseitigen Querstrebe 6 gezeigt, an welcher eine Bohrung 76 ausgebildet ist. An die Bohrung 76 kann ein Ende 78 eines Top-Tether-Bands 79 des Kindersitz 60 eingehängt werden. Das Gurtgestell 1 ist für einen zweisitzigen Fahrzeugsitz (nicht gezeigt) vorgesehen, aus diesem Grund ist an der kopfseitigen Querstrebe eine weitere Bohrung 77 zur Anbringung eines weiteren Kindersitz ausgebildet.

### Bezugszeichenliste

| | | | |
|---|---|---|---|
| 1 | Grundgestell | 39 | Frontseite |
| 2 - 4 | Vertikalstütze | 40 | Rückseite |
| 5, 6 | Querstrebe | 41 | Rückseite |
| 7, 8 | Verbindungselement | 42 - 45 | Haltebügel |
| 9, 10 | Anbringmittel | 46 - 53 | Anbindungspunkt |
| 11 | Stützfuß | 54 - 57 | Haltestelle |
| 12 | Fußbereich | 58 | Vorderseite |
| 13 | Vorderseite | 59 | Halteraste |
| 14 | Kopfbereich | 60 | Kindersitz |
| 15 - 18 | Anbringelement | 61, 62 | Ausnehmung |
| 19, 20 | Befestigungs- | 63, 64 | Seitenfläche |
| | schraube | 65 | Frontseite |
| 21, 22 | Gurtpeitsche | 66, 67 | Anbindungselement |
| 23 | Vorrichtung | 68, 69 | Schraube |
| 24 | Profil | 70, 71 | Verbindungsplatte |
| 25, 26 | Abkantung | 72 - 75 | Schraube |
| 27 - 29 | Profilabschnitt | 76, 77 | Bohrung |
| 30 - 32 | Aussparung | 78 | Ende |
| 33, 34 | Seitenfläche | 79 | Top-Tether-Band |
| 35 - 37 | Randfläche | 80, 81 | Montagestelle |
| 38 | Kante | | |

## Patentansprüche

1. Gurtgestell (1) für einen Fahrzeugsitz mit einer Vorrichtung (23) zur Anordnung eines Personenrückhaltesystems in einem Fahrzeug, insbesondere zur Anordnung eines Kindersitzes (60), um mit dem Personenrückhaltesystem (60) eine in dem Fahrzeug sitzende Person zu sichern, wobei die Vorrichtung (23) am Gurtgestell (1) befestigt ist, wobei das Gurtgestell (1) eine Stützanordnung mit einer Vertikalstütze (2 - 4) und einer Querstrebe (5, 6) umfasst, und wobei im angeordneten Zustand der Stützanordnung am Fahrzeug die Vertikalstütze (2
- 4) aufrecht stehend an einem Fahrzeugboden des Fahrzeugs anordenbar ist, wobei die Vorrichtung (23) als längliches Profil (24) vorhanden ist, wobei die Vorrichtung (23) entlang einer Längsachse des Profils (24) Montagemittel (42
- 45) zur Befestigung von Halterasten (59) des Personenrückhaltesystems (60), insbesondere eines Isofix-Personenrückhaltesystems (60), aufweist, wobei die Montagemittel (42 - 45) entlang der Längsachse des Profils (24) voneinander beabstandet vorhanden sind und wobei die Vorrichtung (23) in Form eines länglichen Profils (24) als vom Gurtgestell (1) separate Anbaueinheit vorhanden ist und nachträglich am Gurtgestell (1) anbringbar ist, **dadurch gekennzeichnet, dass** das Profil (24) derart vorhanden ist, dass das Profil (24) im angeordneten Zustand am Gurtgestell (1) die Vertikalstütze (2 - 4) umgreift.

2. Gurtgestell (1) für einen Fahrzeugsitz nach dem vorangegangenen Anspruch 1, **dadurch gekennzeichnet, dass** das Profil (24) als abgekantetes Profil (24), insbesondere abgekantetes Profilband, vorhanden ist.

3. Gurtgestell (1) für einen Fahrzeugsitz nach einem der vorangegangenen Ansprüche, **dadurch gekennzeichnet, dass** die Vorrichtung (23) Klemmmittel (70, 71) aufweist, wobei die Vorrichtung (23) im angeordneten Zustand am Gurtgestell (1) durch die Klemmmittel (70, 71) an der Vertikalstütze (2 - 4) des Gurtgestells (1) fixiert ist.

4. Gurtgestell (1) für einen Fahrzeugsitz nach einem der vorangegangenen Ansprüche, **dadurch gekennzeichnet, dass** ein Abstand einer Haltestelle (54 - 57) des Montagemittels (42 - 45) von einem Anbindungspunkt (46 - 53) des Montagemittels (42 - 45) am Profil (24) einstellbar vorhanden ist, wobei im angeordneten Zustand die Halteraste (59) des Personenrückhaltesystems (60) an der Haltestelle (54 - 57) des Montagemittels (42 - 45) angreift.

5. Gurtgestell (1) für einen Fahrzeugsitz nach einem der vorangegangenen Ansprüche, **dadurch gekennzeichnet, dass** die Vorrichtung (23), insbesondere das Profil (24), ein Rastermaß aufweist.

6. Gurtgestell (1) für einen Fahrzeugsitz nach einem der vorangegangenen Ansprüche, **dadurch gekennzeichnet, dass** die Stützanordnung zwei Querstreben (5, 6) aufweist, wobei eine erste Querstrebe (6) an einem oberen Ende (14) der Stützanordnung vorhanden ist, wobei die erste Querstrebe (6) zur Anordnung einer Kopfstütze des Fahrzeugsitzes ausgebildet ist, wobei eine zweite Querstrebe (5) in vertikaler Richtung betrachtet in einem mittleren Bereich der Stützanordnung vorhanden ist, wobei im angeordneten Zustand des Gurtgestells (1) am Fahrzeugsitz an der zweiten Querstrebe (5) Komponenten (21, 22) eines Personenrückhaltesystems (60) angeordnet sind, wobei die erste und die zweite Querstrebe (5, 6) sich in horizontaler Richtung an der Stützanordnung erstrecken, wobei an einem äußeren Bereich der ersten und der zweiten Querstrebe (5, 6) die ersten und die zweite Querstrebe (5, 6) in vertikaler Erstreckung betrachtet durch ein bandartiges Element (6, 7) miteinander verbunden sind, wobei das (6, 7) bandartige Element Anbindungsmittel (80, 81) aufweist, wodurch die Vorrichtung (23) im angeordneten Zustand fixiert ist.

7. Gurtgestell (1) für einen Fahrzeugsitz nach dem vorangegangenen Anspruch 6, **dadurch gekennzeichnet, dass** die Vorrichtung (23) in einer vertikalen Erstreckung der Stützanordnung betrachtet in einem Bereich zwischen der ersten und der zweiten Querstrebe (5, 6) am Gurtgestell (1) angeordnet ist.

8. Gurtgestell (1) für einen Fahrzeugsitz nach einem der vorangegangenen Ansprüche 6 oder 7, **dadurch gekennzeichnet, dass** an der ersten Querstrebe (6) Montagemittel (76, 77) zur Befestigung eines Top-Tether-Bands (79) eines Personenrückhaltesystems (60) vorhanden sind.

9. Gurtgestell (1) für einen Fahrzeugsitz nach einem der vorangegangenen Ansprüche 6 bis 8, **dadurch gekennzeichnet, dass** das Gurtgestell (1) ein Rastermaß aufweist.

10. Fahrzeugsitz und/oder Fahrzeugsitzbank mit einem Gurtgestell (1) nach einem der vorangegangenen Ansprüche.

11. Fahrzeug mit einem Fahrzeugsitz und/oder einer Fahrzeugsitzbank nach dem vorangegangenen Anspruch 10 und/oder einem Gurtgestell (1) nach einem der vorangegangenen Ansprüche 1 bis 9.

## Claims

1. Belt frame (1) for a vehicle seat with a device (23) for arranging a passenger restraint system in a vehicle, in particular for arranging a child seat (60), in order, using the passenger restraint system (60), to secure a person seated in the vehicle, wherein the device (23) is fastened to the belt frame (1), wherein the belt frame (1) comprises a support arrangement with a vertical support (2 - 4) and a cross strut (5, 6), and wherein, when the support arrangement is in the arranged state on the vehicle, the vertical support (2 - 4) can be arranged upright on a vehicle floor of the vehicle, wherein the device (23) is present as an elongate profile (24), wherein the device (23) has mounting means (42 - 45) along a longitudinal axis of the profile (24) for the fastening of retaining catches (59) of the passenger restraint system (60), in particular of an Isofix passenger restraint system (60), wherein the mounting means (42 - 45) are present spaced apart from one another along the longitudinal axis of the profile (24), and wherein the device (23) in the form of an elongate profile (24) is present as an add-on unit separate from the belt frame (1) and can be attached retrospectively to the belt frame (1), **characterized in that** the profile (24) is present in such a manner that the profile (24) in the arranged state on the belt frame (1) engages around the vertical support (2 - 4).

2. Belt frame (1) for a vehicle seat according to preceding Claim 1, **characterized in that** the profile (24) is present as a folded profile (24), in particular a folded profile band.

3. Belt frame (1) for a vehicle seat according to either of the preceding claims, **characterized in that** the device (23) has clamping means (70, 71), wherein the device (23) in the arranged state on the belt frame (1) is fixed to the vertical support (2 - 4) of the belt frame (1) by the clamping means (70, 71).

4. Belt frame (1) for a vehicle seat according to one of the preceding claims, **characterized in that** a distance of a retaining point (54 - 57) of the mounting means (42 - 45) from an attachment point (46 - 53) of the mounting means (42 - 45) to the profile (24) is present in an adjustable manner, wherein, in the arranged state, the retaining catch (59) of the passenger restraint system (60) acts on the retaining point (54 - 57) of the mounting means (42 - 45).

5. Belt frame (1) for a vehicle seat according to one of the preceding claims, **characterized in that** the device (23), in particular the profile (24), has a grid dimension.

6. Belt frame (1) for a vehicle seat according to one of the preceding claims, **characterized in that** the support arrangement has two cross struts (5, 6), wherein a first cross strut (6) is present at an upper end (14) of the support arrangement, wherein the first cross strut (6) is designed for the arrangement of a headrest of the vehicle seat, wherein a second cross strut (5) is present in a central region of the support arrangement, as viewed in a vertical direction, wherein, when the belt frame (1) is in the arranged state on the vehicle seat, components (21, 22) of a passenger restraint system (60) are arranged on the second cross strut (5), wherein the first and the second cross strut (5, 6) extend on the support arrangement in a horizontal direction, wherein, on an outer region of the first and of the second cross strut (5, 6), the first and the second cross strut (5, 6), as viewed in a vertical extent, are connected to one another by a band-like element (6, 7), wherein the band-like element (6, 7) has attachment means (80, 81), as a result of which the device (23) is fixed in the arranged state.

7. Belt frame (1) for a vehicle seat according to preceding Claim 6, **characterized in that** the device (23), as viewed in a vertical extent of the support arrangement, is arranged on the belt frame (1) in a region between the first and the second cross strut (5, 6).

8. Belt frame (1) for a vehicle seat according to either of the preceding Claims 6 and 7, **characterized in that** mounting means (76, 77) for the fastening of a top-tether band (79) of a passenger restraint system (60) are present on the first cross strut (6).

9. Belt frame (1) for a vehicle seat according to one of the preceding Claims 6 to 8, **characterized in that** the belt frame (1) has a grid dimension.

10. Vehicle seat and/or vehicle seat bench with a belt frame (1) according to one of the preceding claims.

11. Vehicle with a vehicle seat and/or a vehicle seat bench according to preceding Claim 10 and/or a belt frame (1) according to one of the preceding Claims 1 to 9.

## Revendications

1. Bâti de ceinture (1) pour un siège de véhicule comprenant un dispositif (23) destiné à l'agencement d'un système de retenue de personne dans un véhicule, notamment destiné à l'agencement d'un siège pour enfant (60), afin de mettre en sécurité une personne assise dans le véhicule avec le système de retenue de personne (60) le dispositif (23) étant fixé au bâti de ceinture (1), le bâti de ceinture (1) comportant un arrangement de soutien pourvu d'un soutien vertical (2 - 4) et d'une traverse (5, 6), et le soutien vertical (2 - 4) pouvant, dans l'état agencé de l'arrangement de soutien sur le véhicule, être monté en position debout sur un plancher de véhicule du véhicule, le dispositif (23) étant présent sous la forme d'un profilé allongé (24), le dispositif (23) possédant, le long d'un axe longitudinal du profilé (24), des moyens de montage (42 - 45) servant à la fixation de crans de retenue (59) du système de retenue de personne (60), notamment d'un système de retenue de personne (60) Isofix, les moyens de montage (42 - 45) étant présents espacés les uns des autres le long de l'axe longitudinal du profilé (24) et le dispositif (23) étant présent sous la forme d'un profilé longitudinal (24) en tant que pièce rapportée séparée du bâti de ceinture (1) et pouvant être monté ultérieurement sur le bâti de ceinture (1), **caractérisé en ce que** le profilé (24) est présent de telle sorte que le profilé (24), dans l'état agencé sur le bâti de ceinture (1), enveloppe le soutien vertical (2 - 4).

2. Bâti de ceinture (1) pour un siège de véhicule selon la revendication précédente 1, **caractérisé en ce que** le profilé (24) est présent sous la forme d'un profilé (24) replié, notamment une bande profilée repliée.

3. Bâti de ceinture (1) pour un siège de véhicule selon l'une des revendications précédentes, **caractérisé en ce que** le dispositif (23) possède des moyens de serrage (70, 71), le dispositif (23), dans l'état agencé sur le bâti de ceinture (1), étant bloqué par les moyens de serrage (70, 71) contre le soutien vertical (2 - 4) du bâti de ceinture (1).

4. Bâti de ceinture (1) pour un siège de véhicule selon l'une des revendications précédentes, **caractérisé en ce qu'**un écart entre un point de maintien (54 - 57) du moyen de montage (42 - 45) et un point d'attache (46 - 53) du moyen de montage (42 - 45) est présent de manière réglable sur le profil (24), le cran de retenue (59) du système de retenue de personne (60), dans l'état agencé, venant en prise au niveau du point de maintien (54 - 57) du moyen de montage (42 - 45).

5. Bâti de ceinture (1) pour un siège de véhicule selon l'une des revendications précédentes, **caractérisé en ce que** le dispositif (23), notamment le profilé (24), possède un pas de grille.

6. Bâti de ceinture (1) pour un siège de véhicule selon l'une des revendications précédentes, **caractérisé en ce que** l'arrangement de soutien possède deux traverses (5, 6), une première traverse (6) se trouvant au niveau d'une extrémité supérieure (14) de l'arrangement de soutien, la première traverse (6) étant configurée pour l'agencement d'un appuie-tête du siège de véhicule, une deuxième traverse (5), vue dans la direction verticale, se trouvant dans une zone centrale de l'arrangement de soutien, des composants (21, 22) d'un système de retenue de personne (60) étant agencés au niveau de la deuxième traverse (5) dans l'état agencé du bâti de ceinture (1) sur le siège de véhicule, la première et la deuxième traverse (5, 6) s'étendant dans la direction horizontale sur l'arrangement de soutien, la première et la deuxième traverse (5, 6), vues en extension verticale, étant reliées l'une à l'autre par un élément en forme de bande (6, 7) au niveau d'une zone extérieure de la première et de la deuxième traverse (5, 6), l'élément en forme de bande (6, 7) possédant des moyens d'attache (80, 81), moyennant quoi le dispositif (23) est bloqué à l'état agencé.

7. Bâti de ceinture (1) pour un siège de véhicule selon la revendication précédente 6, **caractérisé en ce que** le dispositif (23), vu dans une extension verticale de l'arrangement de soutien, est disposé sur le bâti de ceinture (1) dans une zone entre la première et la deuxième traverse (5, 6).

8. Bâti de ceinture (1) pour un siège de véhicule selon l'une des revendications précédentes 6 et 7, **caractérisé en ce que** des moyens de montage (76, 77) servant à la fixation d'une bande de sangle supérieure (79) d'un système de retenue de personne (60) sont présents au niveau de la première traverse (6).

9. Bâti de ceinture (1) pour un siège de véhicule selon l'une des revendications précédentes 6 à 8, **caractérisé en ce que** le bâti de ceinture (1) possède un pas de grille.

10. Siège de véhicule et/ou banquette de véhicule comprenant un bâti de ceinture (1) selon l'une des revendications précédentes.

11. Véhicule équipé d'un siège de véhicule et/ou d'une banquette de véhicule selon la revendication précédente 10 et/ou d'un bâti de ceinture (1) selon l'une des revendications précédentes 1 à 9.
